(19) Europäisches Patentamt
European Patent Office
Office européen des brevets

(11) **EP 4 579 829 A1**

(12) **DEMANDE DE BREVET EUROPEEN**

(43) Date de publication:
**02.07.2025 Bulletin 2025/27**

(21) Numéro de dépôt: **23307390.7**

(22) Date de dépôt: **26.12.2023**

(51) Classification Internationale des Brevets (IPC):
*H01M 10/04* (2006.01)   *H01M 10/0585* (2010.01)
*H01M 50/103* (2021.01)

(52) Classification Coopérative des Brevets (CPC):
**H01M 50/103; H01M 10/0413; H01M 10/0468;
H01M 10/0585**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(71) Demandeur: **Automotive Cells Company SE
33520 Bruges (FR)**

(72) Inventeur: **ORIGUCHI, Masato
78120 Rambouillet (FR)**

(74) Mandataire: **Lavoix
2, place d'Estienne d'Orves
75441 Paris Cedex 09 (FR)**

(54) **CELLULE DE BATTERIE EMPÊCHANT LA FORMATION DE LITHIUM MÉTALLIQUE DANS SON ANODE**

(57) La cellule (10) comprend un empilement d'éléments électrochimiques (12), comprenant une cathode, une anode, et un séparateur imprégné d'électrolyte intercalé entre l'anode et la cathode, et comportant un boitier de maintien (16) présentant deux faces principales (20) entre lesquelles est comprimé l'empilement d'éléments électrochimiques (12). Chaque face principale (20) présente au moins une plage d'appui (22) faisant saillie vers l'intérieur au voisinage d'au moins un bord de la face principale (20), ladite plage d'appui (22) étant en appui sur l'empilement d'éléments électrochimiques (12).

FIG.2

EP 4 579 829 A1

**Description**

La présente invention concerne une cellule de batterie empêchant la formation de lithium métallique dans son anode.

L'invention concerne également un procédé de fabrication d'une cellule de batterie, standard et économique, empêchant la formation de lithium métallique dans une anode de la cellule de batterie.

L'invention s'applique en particulier à la fabrication d'une batterie, notamment pour un véhicule électrique ou hybride. On connait déjà, dans l'état de la technique, des cellules à géométrie prismatiques fabriquées par un procédé d'enroulement permettant une bonne séparation entre l'anode et la cathode. Toutefois, ce procédé crée des cellules comportant une densité énergétique moins élevée.

Afin d'améliorer la densité énergétique des cellules, on utilise habituellement un procédé d'empilement pour la fabrication de cellules à géométrie prismatique. Dans ce cas, une telle cellule électrochimique comprend, en particulier, un boîtier fermé par un couvercle, et un empilement d'éléments électrochimiques logé dans le boîtier. L'empilement comprend notamment des électrodes positives et des électrodes négatives formant des feuillets, séparés par une couche de séparation connue sous le terme de « séparateur ».

Le procédé d'empilement consiste dans un premier temps à couper individuellement les feuilles d'anode etde cathode. Les séparateurs peuvent être empilés régulièrement en zigzag afin de minimiser le stress des éléments de la batterie et d'empêcher fondamentalement le contact entre les anodes et les cathodes qui peut provoquer un incendie. Les séparateurs peuvent être également coupés individuellement en feuilles. En plaçant le séparateur entre l'anode et la cathode on obtient un empilement d'éléments électrochimiques. Selon un exemple particulier de batterie, la pluralité de cellules électrochimiques est agencée sous la forme d'au moins un module, chaque module comprenant plusieurs cellules électrochimiques raccordées électriquement les unes aux autres et assemblées mécaniquement les unes aux autres par un système d'assemblage, tel que des plaques d'assemblage.

Les électrodes positives sont reliées à une borne positive du couvercle, et les électrodes négatives reliées à une borne négative du couvercle. Pour réaliser ces connexions, les électrodes comprennent des portions qui dépassent de l'empilement et qui sont soudées les unes aux autres et sur un organe de contact, lequel est soudé sur l'une des bornes.

Dans ce procédé, l'empilement d'éléments électrochimiques doit être de taille inférieure au boitier externe contenant toutes les autres parties de la cellule afin d'avoir suffisamment d'espace lorsque le volume de l'empilement d'éléments électrochimiques augmente légèrement pendant que la cellule est chargée et déchargée pour la première fois (cette première charge lors de la fabrication de la cellule s'appelle "formation"). Cette première charge est très importante puisqu'elle fait réagir les matières actives avec l'électrolyte. L'électrolyte forme une couche de passivation sur les surfaces des matières actives (en anglais "SEI", Solid Electrolyte Interphase). Cette étape est particulièrement importante pour obtenir un système électrochimique stable et pour avoir une bonne durabilité.

Ensuite un autre test de charge et décharge de la cellule est effectué afin de mesurer d'autres paramètres de la batterie telle que la capacité.

Ces tests sont effectués avant la mise sur le marché de la cellule et permettent de stabiliser la chimie de ladite cellule et d'optimiser ses performances. Ensuite, un test de qualité est effectué afin de vérifier son fonctionnement.

Néanmoins, il est indispensable d'assurer un bon contact entre l'anode et la cathode, afin d'éviter une augmentation de la résistance entre l'anode et la cathode. En effet, la marge d'espace entre le boitier externe et l'empilement d'éléments électrochimiques est comprimée par une force externe appliquée sur la cellule pendant les étapes de fabrication. Cependant, en raison de la rigidité de l'enveloppe de la cellule, il est difficile d'appliquer une pression de contact suffisante entre les électrodes sur toute la surface, y compris les bords. Cela se traduit par, une résistance entre l'anode et la cathode trop élevée. La différence de potentiel fixant le fonctionnement de la cellule est alors plus importante et une réaction de réduction se produirait, selon l'équation ci-après, et les ions de lithium deviendraient donc du lithium métallique. Par conséquence, il y aurait une formation de lithium métallique à la surface de contact de l'anode avec l'électrolyte et le séparateur.

[Math 1]

$$Li^+(l) + e^- \rightarrow Li(s)$$

Où $Li^+(aq)$ correspond à l'ion de lithium en état ionisé et $Li(s)$ correspond au lithium métallique.

On connaît des méthodes pour empêcher la formation de lithium métallique dans le cas de cellules à géométrie prismatique, en modifiant le séparateur présent à l'intérieur de l'empilement d'éléments électrochimiques, en utilisant un ruban adhésif à l'extérieur de l'empilement d'éléments électrochimiques afin d'assurer un bon contact entre la cathode et l'anode, ou encore en utilisant des plaques de compression exerçant un appui sur l'empilement d'éléments électrochimiques.

La méthode utilisant un séparateur adhésif, à la place du séparateur utilisé classiquement, entre l'anode et la cathode se trouvant à l'intérieur de l'empilement d'éléments électrochimiques, permet d'empêcher la formation de lithium métallique dans l'empilement d'éléments électrochimiques à géométrie prismatique. Effectivement, un séparateur adhésif est souvent utilisé pour éviter le manque de pression de contact sur les bords de l'empilement d'éléments électrochimiques, en particulier lors de la formation de la première charge). Toutefois, l'imprégnation de l'électrolyte entre l'anode et la cathode est plus problématique, ce qui augmente le temps de production et donc le coût de production d'une cellule. Le coût du séparateur augmente également car dans ce cas, le séparateur ajoute une étape supplémentaire dans l'étape de fabrication de la cellule.

En outre, la méthode d'emballage pour l'empilement de cellules en utilisant du ruban adhésif adapté permet également d'empêcher la formation de lithium métallique dans l'empilement d'éléments électrochimiques à géométrie prismatique. Cependant, le procédé de cette méthode est très complexe et très coûteux. Par ailleurs, l'imprégnation de l'électrolyte entre l'anode et la cathode à l'intérieur de l'empilement d'éléments électrochimiques est plus problématique, ce qui augmente le temps de production et donc le coût de production d'une cellule.

La méthode utilisant des plaques de compression semble être la moins onéreuse et la plus simple à mettre en oeuvre mais elle ne permet pas d'empêcher la formation de lithium métallique dans des cellules à géométrie prismatique dans certaines zones, surtout aux bords des faces adjacentes de l'empilement d'éléments électrochimiques.

Le but de l'invention est alors de proposer une cellule empêchant la formation de lithium métallique dans l'anode.

A cet effet, l'invention a pour objet une cellule comprenant un empilement d'éléments électrochimiques, comprenant une cathode, une anode, et un séparateur imprégné d'électrolyte intercalé entre l'anode et la cathode, et comportant un boitier de maintien présentant deux faces principales entre lesquelles est comprimé l'empilement d'éléments électrochimiques, chaque face principale présentant au moins une plage d'appui faisant saillie vers l'intérieur au voisinage d'au moins un bord de la face principale, ladite plage d'appui étant en appui sur l'empilement d'éléments électrochimiques.

La cellule selon l'invention permet de maintenir un bon contact entre l'anode et la cathode et donc de réduire la résistance entre l'anode et la cathode. Une résistance plus faible se traduit par une différence de potentielle abaissée et empêche la formation de lithium métallique dans la surface de contact de l'anode avec l'électrolyte et le séparateur. Ainsi, une batterie avec une densité énergétique importante peut être obtenue en utilisant le procédé d'empilement.

Suivant d'autres aspects avantageux de l'invention, la cellule comprend une ou plusieurs des caractéristiques suivantes, prises isolément ou suivant toutes les combinaisons techniquement possibles :

- le boitier de maintien est formé par un film replié présentant de lignes de pliage entre l'une de deux faces principales et de faces adjacentes à la face principale, chaque plage d'appui de chaque face principale s'étendant le long de l'une des lignes de pliage,
- chaque plage d'appui de chaque face principale occupe une surface délimitée en longueur par les bords de l'une de deux faces principales, et a une largeur comprise entre 2 et 6 millimètres,
- chaque plage d'appui présente une hauteur comprise entre 0,2 millimètres et 2 millimètres,
- chaque plage d'appui de chaque face principale est élaborée par emboutissage sur chacune de deux faces principales, chaque plage d'appui étant formée par la surface emboutie,
- chaque plage d'appui comporte un ruban de mousse élastique appliquée sur chacune de deux faces principales, chaque plage d'appui de chaque face principale étant formée par la surface du ruban de mousse,
- chaque plage d'appui est élaborée par thermo soudage d'un film plastique rétractable, le film plastique étant propre à être rétracté lorsque l'empilement d'éléments électrochimiques se dilate et que l'appui de chaque plage d'appui sur l'empilement d'éléments électrochimiques n'est plus nécessaire,
- le film plastique rétractable comporte une portion fixe à chacune de deux faces principales, et une partie mobile comportant au moins 4 portions rétractables,
- la partie mobile comporte seulement une position pliée et une position repliée dans laquelle deux portions des quatre portions rétractables soient inclinées avec un angle non droit par rapport au plan défini par chacune de deux faces principales.

L'invention concerne également une batterie, comprenant au moins une cellule telle que définie ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

[Fig. 1] la figure 1 est une représentation d'une batterie comprenant plusieurs cellules ;
[Fig. 2] la figure 2 est une représentation d'une cellule comportant un boitier externe, un boitier de maintien et un empilement d'éléments électrochimiques à géométrie prismatique;
[Fig. 3] la figure 3 est une vue en coupe d'une plage d'appui selon un premier mode de réalisation de l'invention ;
[Fig. 4] la figure 4 est une vue du dessus, représentant l'empilement d'éléments électrochimiques, le boitier de maintien et le boitier externe ;

[Fig. 5] la figure 5 est une vue en coupe d'une plage d'appui selon un second mode de réalisation de l'invention ;
[Fig. 6] la figure 6 est une vue en coupe d'une plage d'appui selon un troisième mode de réalisation de l'invention en configuration pliée ; et
[Fig. 7] la figure 7 est une vue en coupe de la plage d'appui de la figure 6 en configuration repliée.

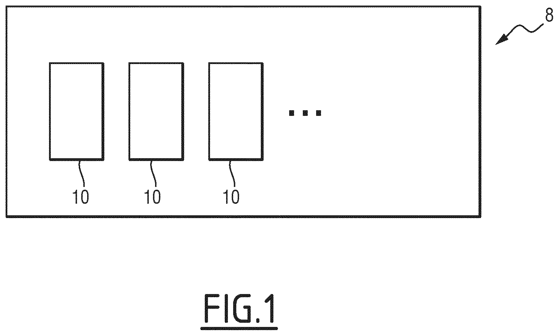

On a représenté, sur la figure 1, une batterie 8 comprenant une pluralité de cellules 10.

La batterie 8 peut être n'importe quel type, de préférence la batterie 8 est une batterie en lithium. La batterie 8 possède plusieurs cellules 10 connectés électriquement entre elles.

En complément facultatif, les cellules 10 sont toutes identiques. En variante (non représentée), seulement une cellule 10 est nécessaire pour faire la batterie 8. Par conséquent, seulement une cellule 10 sera décrite dans la description qui va suivre.

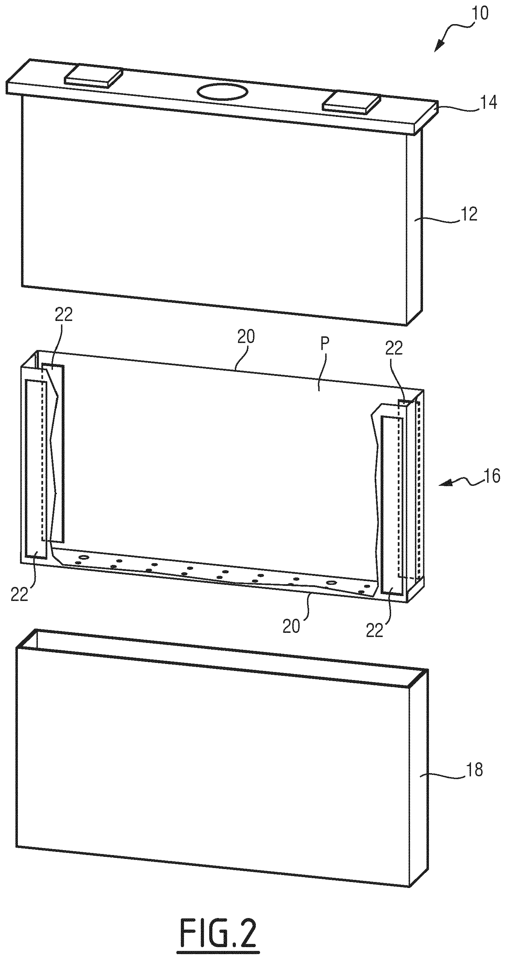

On a représenté, sur la figure 2, une cellule électrochimique 10 comprenant un empilement d'éléments électrochimiques 12 apte à emmagasiner ou fournir de l'énergie. L'empilement d'éléments électrochimiques 12 comporte de manière classique, à l'intérieur, une électrode positive (également appelée cathode), une électrode négative (également appelée anode), et un séparateur imprégné d'électrolyte intercalé entre la cathode et l'anode.

L'homme du métier connaîtra ce que contient chaque empilement d'éléments électrochimiques 12 et n'aura pas besoin des représentations des électrodes ou du séparateur imprégné d'électrolyte pour comprendre l'invention.

La cellule électrochimique 10 a par exemple une forme générale parallélépipédique, adaptée pour permettre la constitution d'un module ou d'un pack (non représentés) intégrant une rangée de cellules électrochimiques connectées électriquement entre elles.

La cellule électrochimique 10 comprend également un couvercle 14, un boitier de maintien 16 apte à contenir l'empilement d'éléments électrochimiques 12 et un boitier externe 18 apte à contenir le boitier de maintien 16 contenant l'empilement d'éléments électrochimiques 12.

Les électrodes de l'empilement 12 d'éléments électrochimiques sont généralement réalisées en oxydes ou phosphates métalliques pour la cathode et en graphite pour l'anode. A titre d'exemple, on peut utiliser le graphite pour l'anode et le lithium fer phosphate ($LiFePO_4$) pour la cathode.

Le séparateur de l'empilement 12 est une membrane poreuse qui empêchent le contact direct entre les électrodes, tout en permettant le passage d'ions grâce à l'électrolyte.

L'électrolyte est une substance conductrice ionique qui permet le transfert d'ions entre les électrodes. L'électrolyte est généralement constitué de mélange de solvants organiques, et d'un sel de lithium. Le choix du sel de lithium et du solvant est fait par exemple par un compromis parmi plusieurs paramètres tels que la puissance, la vitesse de charge, la plage de température de fonctionnement désirée ou encore la durabilité.

Le boitier de maintien 16 comporte au moins deux faces principales 20 entre lesquelles est comprimé l'empilement d'éléments électrochimiques 12, chaque face principale 20 définissant un plan P. Chaque face principale 20 présente au moins une plage d'appui 22 faisant saillie vers l'intérieur au voisinage d'au moins un bord de la face principale et destinée à être en appui sur l'empilement d'éléments électrochimiques 12. De préférence, chaque plage d'appui 22 de chaque face principale 20 occupe une surface délimitée en longueur par les bords de l'une de deux faces principales 20.

Le boitier de maintien 16 est un élément permettant de contenir l'empilement d'éléments électrochimiques 12 et exerçant un appui sur des extrémités dudit empilement d'éléments électrochimiques 12, ces extrémités étant plus affectées par la formation de lithium métallique. De préférence, le boitier de maintien 16 est formé par un film replié présentant de lignes de pliage entre l'une de deux faces principales 20 et de faces adjacentes à la face principale, chaque plage d'appui 22 de chaque face principale 20 s'étendant le long de l'une des lignes de pliage. Le boitier de maintien 16 est par exemple une enveloppe souple qui sert en tant qu'isolant électrique mais également à maintenir l'empilement d'éléments électrochimiques 12.

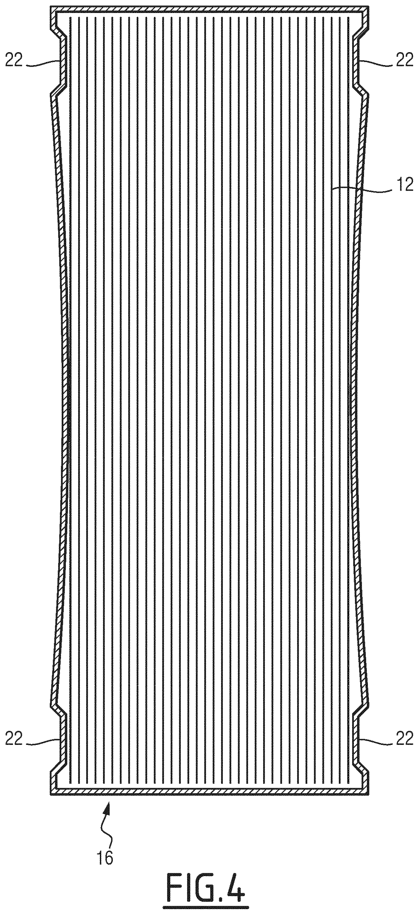

Dans la présente demande, l'extrémité est le terme général utilisé pour désigner les portions de l'empilement d'éléments électrochimiques 12 sur lesquelles les plages d'appui 22 vont appuyer afin d'assurer un bon contact entre l'anode et la cathode, comme le montre la figure 4 à titre d'exemple.

Par exemple, le boitier de maintien 16 est fabriqué par laminage.

Le laminage est un processus de fabrication connu par l'homme du métier. Il consiste à compresser le matériau entre deux cylindres contrarotatifs appelés laminoirs, pour obtenir, en sortie des laminoirs, un film dont l'épaisseur est réduite. Les laminoirs permettent également d'améliorer les propriétés mécaniques et l'état de la surface du matériau en variant la température. A titre d'exemple, le matériau utilisé peut être un polymère, mais d'autres matériaux peuvent être utilisés.

Conformément au premier mode de réalisation, les plages d'appui 22 sont fabriquées par emboutissage sur le boitier de maintien 16.

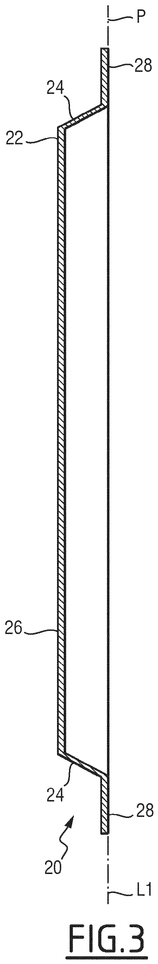

Ainsi, une fois le film obtenu, un procédé d'emboutissage est mis en place localement afin de fabriquer la plage d'appui 22 sur chaque face principale 20. Chaque plage d'appui 22 contient au moins deux portions 24 inclinées, au moins une portion 26 plane exerçant un contact sur l'empilement d'éléments électrochimiques 12, et au moins une portion 28 fixe à chacune de deux faces principales 20. L'au moins une portion plane 26 présente une longueur parallèle à une ligne L1, comme représentée sur la figure 3 à titre d'exemple, d'une dizaine de millimètres. En tenant compte des deux portions 24 inclinées, la plage d'appui 22 présente une longueur parallèle à la ligne L1 plus longue d'environ un millimètre par rapport à la longueur de l'au moins une portion plane 26. A titre d'exemple, la longueur parallèle à la ligne L1 de l'au moins une portion plane 26 est de 12,1 millimètres et la longueur parallèle à la ligne L1 de la plage d'appui 22 comprenant l'ajout des deux portions 24 inclinées est de 13 millimètres.

La hauteur de la plage d'appui 22 suite au procédé d'emboutissage est avantageusement comprise entre 0,2 et 2 millimètres. La largeur de la plage d'appui 22 est de préférence comprise entre 2 et 6 millimètres. A titre d'exemple, dans la figure 3 les deux portions 24 sont inclinées de 60° par rapport à la ligne L1. Néanmoins, d'autres configurations avec d'angles différents sont envisageables.

L'homme du métier comprendra qu'une longueur est une distance selon la direction de la ligne L1, une largeur est une distance selon une direction perpendiculaire à L1 et comprise dans le plan P, et une hauteur est une distance selon une direction perpendiculaire au plan P. Cela s'applique à tous les objets décrits dans l'invention.

L'au moins une portion plane 26 est la seule partie du boitier intermédiaire exerçant un contact sur l'empilement d'éléments électrochimiques 12.

En thermo soudant de parts de film adjacents aux faces principales 20, on obtient le boitier de maintien 16. En variante, de lignes de pliage permettant de fabriquer un boitier de maintien à partir d'un seul film peuvent être élaborés. Chaque plage d'appui 22 de chaque face principale 20 s'étendant le long de l'une des lignes de pliage. Cela permet d'utiliser moins de matière brute pour la fabrication du boitier de maintien 16.

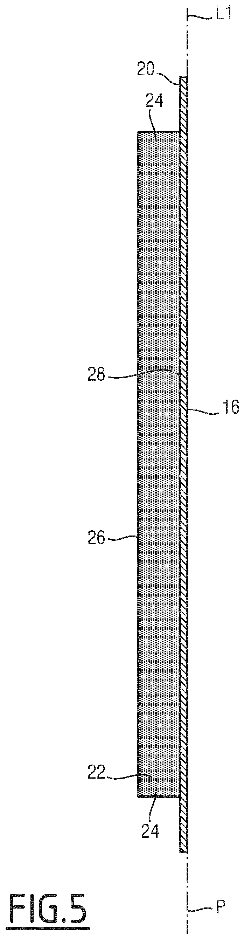

On a représenté, sur la figure 5, une plage d'appui 22 selon un second mode de réalisation de l'invention. Conformément à ce second mode de réalisation, la plage d'appui 22 est fabriquée par thermo soudage d'un ruban de mousse élastique. Le soudage thermoplastique est un procédé utilisé pour assembler des pièces de matériau thermoplastique par chauffage, pression et refroidissement. Pour commencer la soudure, la surface du matériau thermoplastique est chauffée jusqu'à son point de fusion, ou état thermoplastique (le ruban de mousse élastique et le boitier de maintien ont leur propre état thermoplastique). Le matériau est ensuite pressé ensemble jusqu'à ce qu'il refroidisse. La pression appliquée permet aux molécules du boitier de se lier aux molécules du ruban de mousse élastique.

La plage d'appui 22 contient les deux portions 24 inclinées, l'au moins une portion plane 26 exerçant un contact sur l'empilement d'éléments électrochimiques 12 et la portion 28 fixe à chacune de deux faces principales 20. L'au moins une portion plane 26 possède une longueur parallèle à la ligne L1, d'une dizaine de millimètres. En tenant compte des deux portions 24 étant inclinées. A titre d'exemple, la longueur parallèle à la ligne L1 de l'au moins une portion plane 26 plane peut être de 12 millimètres.

La hauteur de la plage d'appui 22 suite au procédé de thermo soudage est avantageusement comprise entre 0,2 et 2 millimètres. La largeur de la plage d'appui 22 est de préférence comprise entre 2 et 6 millimètres. A titre d'exemple, les deux portions 24 sont inclinées de 90° par rapport à la ligne L1.

L'au moins une portion plane 26 est la seule partie du boitier intermédiaire exerçant un contact sur l'empilement d'éléments électrochimiques 12.

En thermo soudant des parties de films adjacents aux faces principales 20, on obtient le boitier de maintien 16. En variante, des lignes de pliage permettant de fabriquer un boitier de maintien à partir d'un seul film peuvent être élaborées. Chaque plage d'appui 22 de chaque face principale 20 s'étend le long de l'une des lignes de pliage. Cela permet d'utiliser moins de matière brute pour la fabrication du boitier de maintien 16.

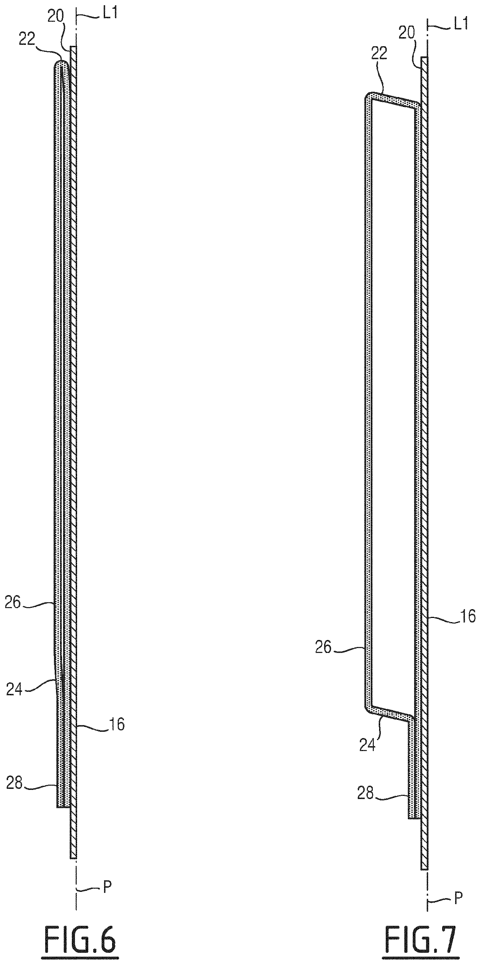

Conformément à un troisième mode de réalisation, représenté sur la figure 6, les plages d'appui 22 sont fabriquées par thermo soudage d'une feuille plastique rétractable correspondant dans ce mode de réalisation à la plage d'appui 22. Cela permet d'avoir l'au moins une portion plane 26 exerçant un appui pendant une centaine de cycles de charge et décharge de la cellule. Dès lors que la cellule a effectué des centaines de cycles, la cellule commence s'enfler et que la surface d'appui n'est plus nécessaire, la plage d'appui 22 est plié et l'au moins une portion 26 plane est éloignée de l'empilement d'éléments électrochimiques 12, comme représenté sur la figure 7.

La plage d'appui 22 comprend de préférence quatre portions 24 et deux des quatre portions 24 sont inclinées, et non perpendiculaires au plan P, et l'au moins une portion plane 26 exerçant un contact sur l'empilement d'éléments électrochimiques 12. La portion plane 26 possède une longueur parallèle à la ligne L1, d'une dizaine de millimètres. En tenant compte des deux portions 24 étant inclinées, la longueur parallèle à la ligne L1 augmente d'environ un millimètre. A titre d'exemple, la longueur parallèle à la ligne L1 de la portion plane peut être de 12 millimètres. La hauteur de la plage d'appui 22 suite au procédé de thermo soudage est avantageusement comprise entre 0,2 et 2 millimètres. La largeur de la plage d'appui 22 est de préférence comprise entre 2 et 6 millimètres. Deux des quatre portions rétractables sont de préférence inclinées avec un angle non droit par rapport au plan défini par chacune de deux faces principales. A titre d'exemple, les deux portions 24 sont inclinées de 60° par rapport à la ligne L1. Cela est représenté dans la figure 6.

L'au moins une portion plane 26, est la seule partie du boitier intermédiaire exerçant un contact sur l'empilement d'éléments électrochimiques 12.

En thermo soudant de parts de film adjacents aux faces principales 20, on obtient le boitier de maintien 16. En variante, des lignes de pliage permettant de fabriquer un boitier de maintien à partir d'un seul film peuvent être élaborées. Chaque plage d'appui 22 de chaque face principale 20 s'étend le long de l'une des lignes de pliage. Cela permet d'utiliser moins de matière brute pour la fabrication du boitier de maintien 16.

Le boitier externe 18 est un élément nécessaire à la fabrication de la cellule. Dans la plupart des cas, le boitier externe 18 est fabriqué en aluminium ou en acier. D'une part, il sert à contenir le boitier de maintien 16 contenant l'empilement d'éléments électrochimiques 12, d'autre part à protéger l'empilement d'éléments électrochimiques 12 des perturbations extérieures. A titre d'exemple, il peut être fabriqué par usinage ou assemblage.

Un procédé de fabrication de la cellule 10 va maintenant être décrit.

Le procédé comporte tout d'abord une étape de fabrication des électrodes, de manière connue en soi. Les électrodes sont fabriquées en enduisant une fine couche de matériau, adapté pour la cellule, sur un support métallique. Ces électrodes sont ensuite découpées en bandes de forme prismatique.

Ensuite, l'électrolyte est préparé en dissolvant un sel de lithium dans un solvant organique. Le dissolvant est ensuite filtré pour éliminer les impuretés.

Lorsque les électrodes sont fabriquées, l'empilement d'éléments électrochimiques 12 est créé. L'empilement d'éléments électrochimiques 12 est constitué d'au moins un bloc contenant une cathode, une anode et un séparateur, empilés dans un boîtier prismatique. De préférence l'empilement d'éléments électrochimiques contient plusieurs blocs.

L'électrolyte est par la suite injecté dans l'empilement d'éléments électrochimiques 12. Il est essentiel de s'assurer que la quantité d'électrolyte est adéquate.

Le boitier de maintien 16 est fabriqué avec des plages d'appui 22 exerçant un appui sur les extrémités de l'empilement de cellules électrochimique étant plus affectées par la formation de lithium métallique.

Le boîtier de maintien 16 et l'empilement d'éléments électrochimiques 12 sont insérés dans le boitier externe 18 et scellés hermétiquement pour éviter les fuites d'électrolyte et l'entrée d'humidité.

La cellule est soumise à un test de charge et décharge consistant en plusieurs cycles de charge et de décharge. Cela permet de stabiliser la chimie de la cellule et d'optimiser ses performances.

Les cellules sont soumises à des tests de qualité pour s'assurer de leur fiabilité et de leur sécurité. Cela comprend des tests de capacité, de résistance interne et de sécurité thermique.

Enfin, les cellules sont emballées de manière appropriée pour la distribution et l'utilisation.

Ainsi, la cellule selon l'invention, et le procédé associé, proposent une solution empêchant la formation de lithium métallique, de manière plus simple et moins coûteuse.


**Revendications**

1.    Cellule (10) comprenant un empilement d'éléments électrochimiques (12), comprenant une cathode, une anode, et un séparateur imprégné d'électrolyte intercalé entre l'anode et la cathode, et comportant un boitier de maintien (16) présentant deux faces principales (20) entre lesquelles est comprimé l'empilement d'éléments électrochimiques (12), **caractérisée en ce que** chaque face principale (20) présente au moins une plage d'appui (22) faisant saillie vers l'intérieur au voisinage d'au moins un bord de la face principale (20), ladite plage d'appui (22) étant en appui sur l'empilement d'éléments électrochimiques (12).

2.    Cellule (10) selon la revendication 1, dans laquelle le boitier de maintien (16) est formé par un film replié présentant de lignes de pliage entre l'une de deux faces principales (20) et de faces adjacentes à la face principale, chaque plage d'appui (22) de chaque face principale (20) s'étendant le long de l'une des lignes de pliage.

3.    Cellule (10) selon la revendication 1 ou 2, dans laquelle chaque plage d'appui (22) de chaque face principale (20) occupe une surface délimitée en longueur par les bords de l'une de deux faces principales (20), et a une largeur comprise entre 2 et 6 millimètres.

4.    Cellule (10) selon l'une quelconque des revendications précédentes, dans laquelle chaque plage d'appui (22) présente une hauteur comprise entre 0,2 millimètres et 2 millimètres.

5.    Cellule (10) selon l'une quelconque des revendications précédentes, selon laquelle chaque plage d'appui (22) de chaque face principale (20) est élaborée par emboutissage sur chacune de deux faces principales, chaque plage d'appui (22) étant formée par la surface emboutie.

6.    Cellule (10) selon l'une des revendications 1 à 4, dans laquelle chaque plage d'appui (22) comporte un ruban de mousse élastique appliquée sur chacune de deux faces principales (20), chaque plage d'appui (22) de chaque face principale (20) étant formée par la surface du ruban de mousse.

7. Cellule (10) selon l'une des revendications 1 à 4, dans laquelle chaque plage d'appui (22) est élaborée par thermo soudage d'un film plastique rétractable, le film plastique étant propre à être rétracté lorsque l'empilement d'éléments électrochimiques (12) se dilate et que l'appui de chaque plage d'appui (22) sur l'empilement d'éléments électrochimiques (12) n'est plus nécessaire.

8. Cellule (10) selon la revendication 7, dans laquelle le film plastique rétractable comporte une portion (28) fixe à chacune de deux faces principales (20), et une partie mobile comportant au moins 4 portions rétractables.

9. Cellule (10) selon la revendication 8, dans laquelle la partie mobile comporte seulement une position pliée et une position repliée dans laquelle deux portions (24) des quatre portions rétractables soient inclinées avec un angle non droit par rapport au plan défini par chacune de deux faces principales (20).

10. Batterie (8), comprenant au moins une cellule (10) selon l'une quelconque des revendications précédentes.

## FIG.1

10

14

12

22

20

P

22

16

22

20

20

22

18

## FIG.2

# FIG.3

22    22

12

22    22

16

FIG.4

## FIG.5

FIG.6

FIG.7

Europäisches
Patentamt

European
Patent Office

Office européen
des brevets

**RAPPORT DE RECHERCHE EUROPEENNE**

Numéro de la demande

EP 23 30 7390

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KR 2022 0014879 A (HITACHI ZOSEN CORP [JP]) 7 février 2022 (2022-02-07) * alinéas [0016], [0018], [0027]; figure 1 * | 1-4,6-10 | INV. H01M10/04 H01M10/0585 H01M50/103 |
| | ----- | | |
| X | JP 2011 238504 A (SHARP KK) 24 novembre 2011 (2011-11-24) * alinéas [0136] - [0140]; figures 35,36 * | 1-10 | |
| | ----- | | |
| A | JP 2015 095285 A (HITACHI AUTOMOTIVE SYSTEMS LTD) 18 mai 2015 (2015-05-18) * abrégé; figures 1-8 * | 1-10 | |
| | ----- | | |

**DOMAINES TECHNIQUES RECHERCHES (IPC)**

H01M

Le présent rapport a été établi pour toutes les revendications

| Lieu de la recherche | Date d'achèvement de la recherche | Examinateur |
|---|---|---|
| Munich | 7 juin 2024 | Rischard, Marc |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

........................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 30 7390

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-06-2024

| Document brevet cité au rapport de recherche | Date de publication | Membre(s) de la famille de brevet(s) | Date de publication |
|---|---|---|---|
| KR 20220014879 A | 07-02-2022 | EP 3979379 A1 | 06-04-2022 |
| | | JP 7360820 B2 | 13-10-2023 |
| | | JP 2020194743 A | 03-12-2020 |
| | | KR 20220014879 A | 07-02-2022 |
| | | US 2022231356 A1 | 21-07-2022 |
| | | WO 2020241781 A1 | 03-12-2020 |
| JP 2011238504 A | 24-11-2011 | JP 5543269 B2 | 09-07-2014 |
| | | JP 2011238504 A | 24-11-2011 |
| JP 2015095285 A | 18-05-2015 | AUCUN | |

EPO FORM P0460

Pour tout renseignement concernant cette annexe : voir Journal Officiel de l'Office européen des brevets, No.12/82